# EUROPEAN PATENT APPLICATION

(11) **EP 1 795 702 A2**
(43) Date of publication of application: **13.06.2007**
(21) Application number: 06255724.4
(22) Date of filing: 07.11.2006
(51) Int. Cl.: F01D 5/02, F16F 15/32, F16C 3/00

(54) **Balancing apparatus and method for rotor shaft flange**

(30) Priority: 07.12.2005 GB 0524928
(71) Applicant: Rolls-Royce plc, London SW1E 6AT (GB)
(72) Inventor: Evans, Peter Antony, Chellaston, Derby DE73 1XL (GB); Titterton, Barry, Belper, Derbyshire DE56 0HA (GB)
(74) Representative: Gunn, Michael Alan

(57) **Abstract**

An arrangement comprising a flange (2) of a rotatable shaft (120a), comprising a plurality of apertures; a multiplicity of anti-score plates (30) each having two or more openings aligned with corresponding apertures of the flange; a plurality of bolts (14) extending through the plurality of apertures in the flange (2) and the corresponding openings of the anti-score plates (30a, 30b), wherein, the anti-score plates (30a, 30b) comprise interlocking features (36, 38) for engaging adjacent plates (30a, 30b) to prevent rotation during assembly of the arrangement.

## Description

The present invention relates to anti-score plates for use in balancing and protecting a bolted rotatable flange. In particular, it relates to the use of such anti-score plates in a gas turbine engine.

It is common practice to use bolts and nuts to attach flanges together. A problem arises, however, if the bolt head makes direct contact with the flange surface. On tightening the bolt, the bolt head may scratch the flange surface, which may ultimately lead to the cracking and breaking of the flange. It is not possible simply to put a washer between the bolt head and the flange surface because on tightening the bolt, the washer itself may rotate and damage the flange surface. The problem has therefore been addressed by using an anti-score plate instead of a washer. Instead of having a single hole for receiving a single bolt, an anti-score plate has a plurality of holes each of which receives a bolt. Therefore the anti-score plate does not rotate on tightening the bolts.

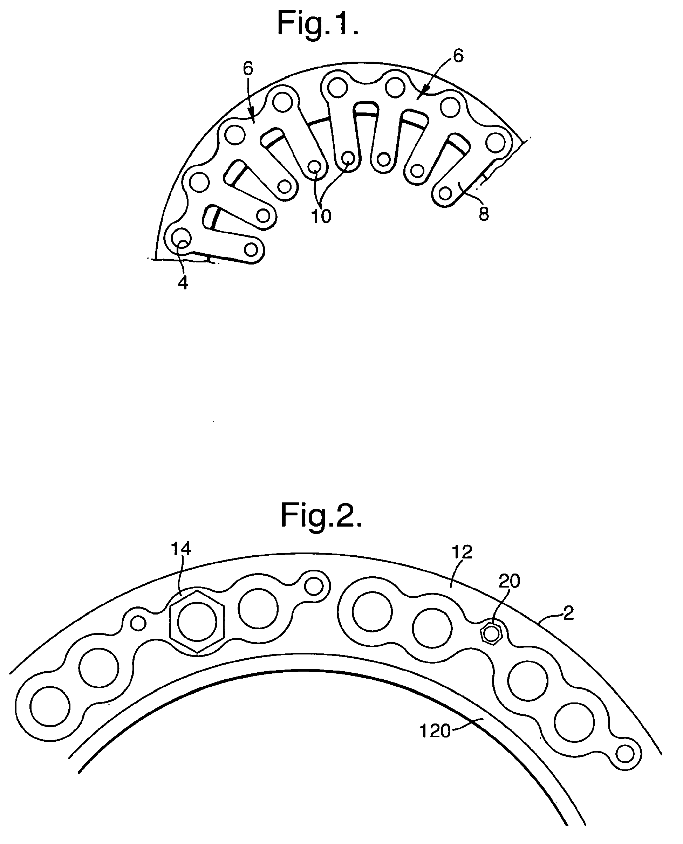

It is common practice to use flanges to connect rotating shafts. The flange of one rotating shaft is bolted to the flange of the other rotating shaft. A problem, however, arises if the connected shafts are rotating at relatively high speeds. The flanges may introduce off-axis inertia, which if not balanced, will impede the smooth rotation of the connected shafts. This problem has been addressed in the prior art by using balance weights attached to the flange or using anti-score plates which have balance weights attached to balance the rotating shaft. Fig. 1 illustrates a prior art balanced bolted flange. A flange 2 is bolted using a plurality of bolts 4. An anti-score plate 6 protects the surface of the flange 2 from the heads of the bolts 4. The anti-score plates 6 are identical and have digit-like extensions 8. Each of the digit-like extensions 8 has a hole 10 at its extremity. Balance weights of different masses may be attached via the holes 10. Typically, a balance weight comprises a screw, nut and washer(s) assembly. If more mass is required at a particular position, then the assembly carries more washers or heavier washers.

There are several drawbacks to this solution. A large number of individual balancing weights are required to balance the rotatable flange and the balanced rotatable shaft is therefore heavy. There is a limitation to the maximum mass a balance weight can have and it is often not possible to position the appropriate balancing mass at the appropriate position.

Thus the prior art provides an arrangement comprising: a flange of a rotatable shaft, comprising a plurality of apertures; a multiplicity of anti-score plates each having two or more openings aligned with corresponding apertures of the flange; and a plurality of bolts extending through the plurality of apertures in the flange and the corresponding openings in the anti-score plates wherein each of the anti-score plates is the same.

A further prior art anti-score plate 12 arrangement is shown in figure 2. This anti-score plate fits under the nuts 14 that correspond to four main bolts joining two shafts 120. There are twenty-four bolts in the joint arranged in pairs, thus there are 6 plates per flange joint 2. The plates are also retained by two smaller bolts 20 per plate, which keep the anti-score plates in place when the two shafts are disconnected from one another. It is permissible during a rotor balancing procedure to replace one or more of the standard anti-score plates shown above which heavier 'balance' plates (as described in US6,931,861). This necesitates removing all six bolts that attach the anti-score plate to the rotor. The four main bolts are under high loading and the removal of four adjacent bolts can cause the flange joint to distort which affects the balance process. This design is also limited to having the number of main bolts as a multiple of four. The distortion could be minimised by reducing the span of the anti-score plates so that they only fit under two main bolts and one fitting bolt. However, this has the additional problem of the anti-score plate twisting during the tightening of the small bolts, which causes the main bolt holes in the plate to be misaligned with the equivalent holes in the disc flange thus preventing the main bolts from being fitted.

According to the present invention there is provided an arrangement comprising: a flange of a rotatable shaft, comprising a plurality of apertures; a multiplicity of anti-score plates each having two or more openings aligned with corresponding apertures of the flange; a plurality of bolts extending through the plurality of apertures in the flange and the corresponding openings of the anti-score plates, characterised in that the anti-score plates comprise interlocking features for engaging adjacent plates to prevent rotation during assembly of the arrangement.

Preferably, the interlocking features comprise a protrusion at one end and a matching recess at the other end of each anti-score plate, such that a protrusion on one plate cooperates with a recess on an adjacent plate.

Preferably, the arrangement comprises at least a first anti-score plate having a first mass and at least a second different anti-score plate having a second, different, mass.

Preferably, the first anti-score plate and the second anti-score plate have the same thickness.

Preferably, the multiplicity of anti-score plates is arranged so that the rotatable flange is substantially balanced for rotation.

Preferably, the arrangement further comprises fine balance adjustment means.

A gas turbine engine preferably comprises an arrangement as described in the above paragraphs for connecting turbine shafts of the gas turbine engine.

It is also an aspect of the present invention that a set of anti-score plates is provided for use with an arrangement as described in the above paragraphs.

Preferably, the set of anti-score plates for use with a bolted rotatable flange, as described in the above paragraphs, in that said set comprises: at least a first anti-score plate having a first mass and at least a second different anti-score plate having a second, different, mass.

The present invention also relates to a method of attaching a first shaft to a second shaft for substantially balanced rotation characterised in that said method comprises the steps of: bolting a flange of a first shaft to a flange of a second shaft; protecting the surface of one of the flanges from each bolt by placing an anti-score plate between each bolt and the flange, characterised by: selecting and placing at least one first anti-score plate having a first mass and selecting and placing at least one second anti-score plate having a second mass.

The present invention also provides an anti-score plate for use with a bolted assembly, characterised in that the anti-score plate comprises interlocking features, in use, for engaging an adjacent plate to prevent rotation during assembly of the arrangement.

For a better understanding of the present invention reference will now be made, by way of example only, to the accompanying drawings in which:-
Fig. 1 illustrates first prior art anti-score plate arrangement;
Fig. 2 illustrates second prior art anti-score plate arrangement;
Fig. 3 illustrates a gas turbine engine;
Fig. 4 illustrates an arrangement of bolted shafts;
Fig. 5 illustrates an anti-score plate arrangement according to the present invention.

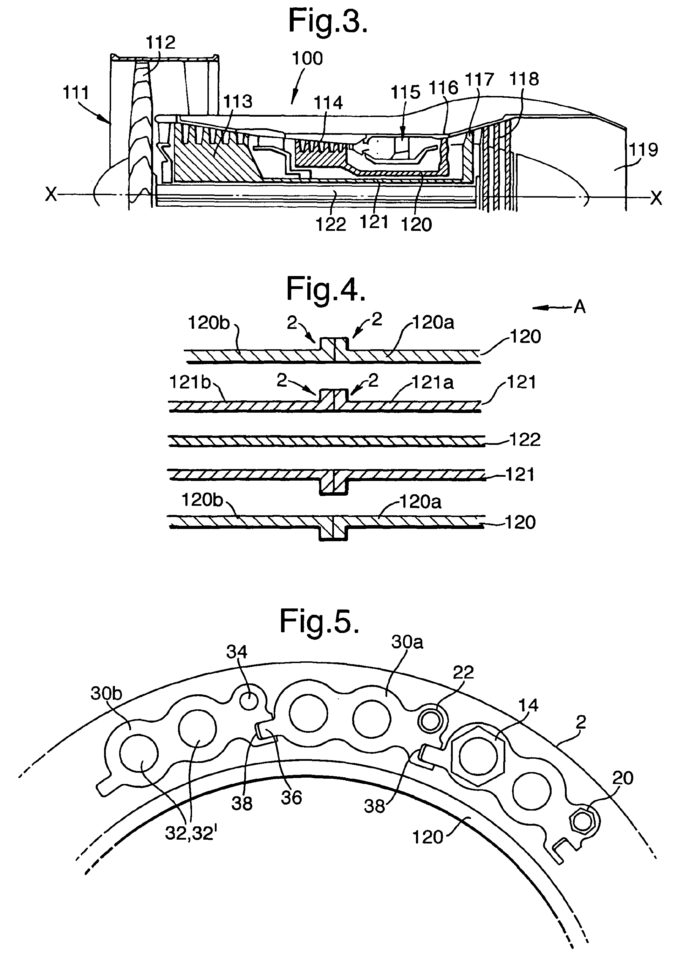

Referring to Fig. 3, a gas turbine engine 100 comprises, in axial flow series, an air intake 111, a propulsive fan 112, an intermediate pressure compressor 113, a high-pressure compressor 114, a combustor 115, a turbine arrangement comprising a high-pressure turbine 116, an intermediate pressure turbine 117 and a low-pressure turbine 118, and an exhaust nozzle 119.

The gas turbine 100 operates in a conventional manner so that air entering the intake 111 is accelerated by the fan 112 which produces two air flows: a first air flow into the intermediate pressure compressor 113 and a second bypass air flow which provides propulsive thrust. The intermediate pressure compressor 113 compresses the air flow directed into it before delivering that air to the high pressure compressor 114 where further compression takes place.

The compressed air exhausted from the high-pressure compressor 114 is directed into the combustor 115 where it is mixed with fuel and the mixture combusted. The resultant hot combustion products then expand through and thereby drive the high, intermediate and low pressure turbines 116, 117 and 118, before being exhausted through the nozzle 119 to provide additional propulsive thrust. The high, intermediate and low-pressure turbines 116, 117 and 118 respectively drive via high-speed shaft 120, intermediate speed shaft 121 and low speed shaft 122, the high-pressure compressors 114, the intermediate pressure compressors 113 and the fan 112. During engine operation, the high-speed shaft 120 may rotate at approximately 12,000 rpm and the intermediate speed shaft may rotate at approximately 8,000 rpm.

Fig. 4 illustrates the high-speed shaft 120, the intermediate speed shaft 121 and the low speed shaft 122. The shafts are coaxial with the low speed shaft 122 being positioned inside the intermediate speed shaft 121. The intermediate speed shaft 121 is positioned inside the high-speed shaft 120. The high-speed shaft 120 comprises a first shaft 120a and a second shaft 120b connected via bolted flanges 2. The intermediate speed shaft 121 comprises a first intermediate speed shaft 121a and a second intermediate speed shaft 121b connected via bolted flanges 2. The flanges 2 are connected together using bolts and nuts. Anti-score plates are positioned between the heads of the bolts and the surface of the flange or between the nuts and the surface of the flange.

Figure 5 shows the bolted flange 2 in more detail. Each anti-score plate 30a, 30b defines a retention bolt hole 34 and two main bolt holes 32 for connecting the flanges 2 of shafts 120a and 120b together. When the shafts are assembled together, a plurality of bolts 14 extend through a plurality of apertures 32' in the flange 2 and the corresponding openings 32 of the anti-score plates 30a, 30b.

The configuration of each anti-score plate 30 is such that they may be used to balance the rotor assembly in accordance with the teachings of US6,931,861, which are incorporated herein by reference thereto. The anti-score plates 30 further comprise interlocking features, which in this exemplary embodiment comprise a protrusion 36 at one end and a matching recess 38 at the other end. The protrusion 36 and recess 38 are sized and positioned so that, on assembly to the rotor 120, they interlock with the corresponding feature on circumferentially adjacent plates 30a, 30b. The purpose of the interlocking features is to resist the twisting of the plates as the fitting bolts are tightened, thus keeping the main bolt holes aligned.

An advantage of this arrangement is that it reduces the number of main bolts that have to be removed during the balance procedure and therefore reduces the potential for flange distortion, improving balance process repeatability. It is also advantageous that the number of main bolts in a flange design can now be a multiple of two rather than four.

It should also be apparent that the arrangement of anti-score plates 30 of the present invention reduce the size of, and increasing the number of, balance plates 30 which increases the effectiveness of the balance process by allowing smaller weight change increments and positioning, and reduces the total amount of balance weight required to achieve a particular balance correction effect.

The description incorporates the teachings of US6,031,861 as hereinbefore stated and with particular reference to using the plates for balancing the rotor of a gas turbine engine or other similar rotating shaft. However, briefly, the arrangement of anti-score plates 30a, 30b comprises at least a first anti-score plate 30a having a first mass and at least a second different anti-score plate 6b having a second, different, mass. The first anti-score plate 30a and the second anti-score plate 30b preferably have the same thickness or different thickness and therefore different weights. It is an intention that the multiplicity of anti-score plates 30a, 30b are arranged so that the rotatable flange 2 is substantially balanced for rotation. Additionally, the arrangement further comprises fine balance adjustment means 22. There are twelve fine balance adjusters 22, however, more or less may be used. Preferably, the fine balance adjusters 22 are positioned on a circle of constant radius. A fine balance adjuster 22 is positioned between each of the bolts 20 of each of the anti-score plates 30a, 30b.

It is intended that a set of anti-score plates 30a, 30b for use with a bolted rotatable flange 2 such that the set of plates 30a, 30b comprises at least a first anti-score plate 30a having a first mass and at least a second different anti-score plate 30b having a second, different, mass.

The present invention is also realised by a method of attaching a first shaft 120a to a second shaft 120b for substantially balanced rotation, and comprises the steps of: bolting a flange 2 of a first shaft 120a to a flange 2 of a second shaft 120b; protecting the surface of one of the flanges 2 from each bolt 20 by placing an anti-score plate 30a, 30b between each bolt 20 and the flange 2, wherein: selecting and placing at least one first anti-score plate 30a having a first mass and selecting and placing at least one second anti-score plate 30b having a second mass.

Although the present invention has been described in the preceding paragraphs with reference to various examples, it should be appreciated that modifications and variations to the examples given can be made without departing from the spirit and scope of the invention.

## Claims

1. An arrangement comprising:
a flange (2) of a rotatable shaft (120a), comprising a plurality of apertures (32');
a multiplicity of anti-score plates (30) each having two or more openings (32) aligned with corresponding apertures of the flange;
a plurality of bolts (14) extending through the plurality of apertures (32') in the flange (2) and the corresponding openings (32) of the anti-score plates (30a, 30b), **characterised in that** the anti-score plates (30a, 30b) comprise interlocking features (36, 38) for engaging adjacent plates (30a, 30b) to prevent rotation during assembly of the arrangement.

2. An arrangement as claimed in claim 1, wherein interlocking features (36, 38) comprise a protrusion (36) at one end and a matching recess (38) at the other end of each anti-score plate (30a, 30b), such that a protrusion (36) on one plate (30a) cooperates with a recess (38) on an adjacent plate (30b).

3. An arrangement as claimed in any one of claims 1-2, wherein the arrangement comprises at least a first anti-score plate (30a) having a first mass and at least a second different anti-score plate (6b) having a second, different, mass.

4. An arrangement as claimed in any one of claims 1-3, **characterised in that** the first anti-score plate (30a) and the second anti-score plate (30b) have the same thickness.

5. An arrangement as claimed in any one of claims 1-4, **characterised in that** the multiplicity of anti-score plates (30a, 30b) are arranged so that the rotatable flange (2) is substantially balanced for rotation.

6. An arrangement as claimed in claim 5, **characterised in that** said arrangement further comprises fine balance adjustment means (22).

7. A gas turbine engine comprising an arrangement as claimed in any preceding claim for connecting turbine shafts of the gas turbine engine (100).

8. A set of anti-score plates for use with an arrangement as claimed in any one of claims 1 to 6.

9. A set of anti-score plates (30a, 30b) for use with a bolted rotatable flange (2) as claimed in any one of claims 1-6 **characterised in that** said plates (30a, 30b) comprises:
at least a first anti-score plate (30a) having a first mass and at least a second different anti-score plate (30b) having a second, different, mass.

10. A method of attaching a first shaft (120a) to a second shaft (120b) for substantially balanced rotation **characterised in that** said method comprises the steps of:
bolting a flange (2) of a first shaft (120a) to a flange (2) of a second shaft (120b);
protecting the surface of one of the flanges (2) from each bolt (4) by placing an anti-score plate (30a, 30b) between each bolt (4) and the flange (2), **characterised by**: selecting and placing at least one first anti-score plate (30a) having a first mass and selecting and placing at least one second anti-score plate (30b) having a second mass.

11. An anti-score plate (30a, 30b) for use with a bolted assembly (20), **characterised in that** the anti-score plate (30a, 30b) comprises interlocking features (36, 38), in use, for engaging an adjacent plate (30a, 30b) to prevent rotation during assembly of the arrangement.
